# EUROPÄISCHE PATENTSCHRIFT

(11) **EP 3 466 866 B1**
(45) Veröffentlichungstag und Bekanntmachung des Hinweises auf die Patenterteilung: **06.09.2023**
(21) Anmeldenummer: 18198557.3
(22) Anmeldetag: 04.10.2018
(51) Int. Cl.: B66C 13/08, B66D 1/28, B66C 23/18, B66C 23/74, B66D 1/04, B66D 1/12, B66D 1/36, F03D 80/00, B66C 23/20, F03D 13/10

(54) **WINDENMONTAGERAHMEN UND WINDENANORDNUNG**
WINCH MOUNTING FRAME AND WINCH ASSEMBLY
CADRE DE MONTAGE DE TREUIL ET DISPOSITIF FORMANT TREUIL

(30) Priorität: 06.10.2017 DE 102017009291
(43) Veröffentlichungstag der Anmeldung: 10.04.2019
(73) Patentinhaber: Siemens Gamesa Renewable Energy Service GmbH, 20097 Hamburg (DE)
(72) Erfinder: Lorbach, Severin, 24114 Kiel (DE); Zippel, Florian, 24626 Groß Kummerfeld (DE); Murthy, Chandra Sekhara, 560054 Bangalore (IN)
(74) Vertreter: Glawe, Delfs, Moll

(56) Entgegenhaltungen:
- WO-A1-2017/060825
- CN-A- 102 674 189
- CN-U- 203 306 956
- CN-U- 206 359 162
- DE-A1- 2 254 074
- TW-A- 201 725 167

## Beschreibung

Die Erfindung betrifft einen Windenmontagerahmen zur Verwendung in einer Windenanordnung zum Steuern der Ausrichtung einer Windkraftanlagenkomponente während Hubabläufen beim Aufstellen einer Windkraftanlage und eine entsprechende Windenanordnung.

Bei modernen Windkraftanlagen ist üblicherweise eine Gondel drehbar auf einem Turm montiert, die die Rotorachse eines Rotors mit drei Rotorblättern trägt, der einen Generator antreibt. Beim Aufstellen einer solchen Windkraftanlage werden verschiedene Komponenten in beachtlicher Größe, z. B. die Gondel, der Generator und die Rotorblätter, mittels eines Krans auf den Turm gehoben. Beim Anheben durch einen Kran muss die Ausrichtung der Komponenten gesteuert werden, um Zusammenstöße mit dem Turm zu vermeiden und die Installation der Komponenten, insbesondere die Montage an der jeweiligen übergeordneten Komponente, zu vereinfachen.

Zum Steuern der Ausrichtung von einem Kran hängenden beachtlich dimensionierten Komponenten werden bekanntermaßen ein oder mehrere Führungsseile verwendet, die an dem einen Ende mit der Komponente außerhalb der Schwerpunktachse verbunden sind und an dem anderen Ende auf einer Winde am Boden aufgerollt sind. Durch ein Anpassen der Spannung des einen oder der mehreren Führungsseile kann die Ausrichtung der angehobenen Komponente, vor allem durch Rotieren der Komponente um die Schwerpunktachse, angepasst werden.

Der Stand der Technik kennt mehrere Arten von Winden, die für Kranabläufe geeignet sind. Diese Winden können entweder manuell oder per Motorangetrieben sein. CN 206 359 162 offenbart den Oberbegriff des Anspruchs 1.

Damit eine Winde ortsfest bleibt, selbst wenn das Führungsseil unter starker Spannung steht, muss die Winde hinreichend verankert sein. Beispielsweise kann die Winde unbeweglich mit einem hinreichend schweren Betonblock verbunden sein oder mit einem hinreichend schweren Fahrzeug wie einem Gabelstapler mittels eines Rahmens, der sich über beide Gabeln eines Gabelstaplers erstreckt, verbunden sein. In jedem Fall ist die Verankerungseinrichtung für die Winde vordefiniert und oft starr mit der Winde verbunden.

Es ist eine Aufgabe der Erfindung, eine verbesserte Windenanordnung und - als Teil derselben - einen Windenmontagerahmen bereitzustellen.

Die Lösung nach der Erfindung liegt im Windenmontagerahmen nach dem Hauptanspruch und der Windenanordnung nach Anspruch 8. Vorteilhafte Erweiterungen sind Gegenstand der Unteransprüche.

Somit betrifft die Erfindung einen Windenmontagerahmen zur Verwendung in einer Windenanordnung zum Steuern der Ausrichtung einer Windkraftanlagenkomponente während Hubabläufen beim Aufstellen der Windkraftanlage, der eine obere Montageeinrichtung zum Verbinden einer Winde mit demselben und eine untere Montageeinrichtung, die eine Hülse zum Aufschieben des Windenmontagerahmens auf eine einzelne Gabel eines Gabelstaplers und Schraubenlöcher zum alternativen lösbaren Anschrauben des Windenmontagerahmens an einen ortsfesten Anbringungspunkt umfasst, umfasst.

Weiterhin betrifft die Erfindung eine Windenanordnung, die einen Windenmontagerahmen nach der Erfindung und eine lösbar mit der oberen Montageeinrichtung verbundene Winde umfasst.

Der erfindungsgemäße Windenmontagerahmen ist gegenüber dem Stand der Technik dahingehend vorteilhaft, dass er in der Verwendung flexibler ist und ein geringes Gewicht auf- weist, was seine Handhabung weiter vereinfacht. Die Erfindung basiert auf der Erkenntnis, dass die aus dem Stand der Technik bekannten Winden in der Regel Verankerungseinrichtungen in irgendeiner Form umfassen, was ihre Verwendung in Fällen, in denen die Verankerungseinrichtungen ungeeignet sind, z. B. aufgrund unzureichender Bodenfestigkeit oder bei Fehlen angemessener Ausrüstung, schwierig macht.

Die Erfindung sieht daher einen Windenmontagerahmen vor, der wahlweise entweder mit einem Gabelstapler verbunden oder an einen ortsfesten Anbringungspunkt angeschraubt sein kann, wobei der Anbringungspunkt z. B. ein hinreichend schwerer Betonblock, ein bereits fertiggestelltes Fundament, das aus anderen Gründen gegossen wurde, oder eine beliebige sonstige Struktur, die entweder hinreichend schwer oder in sonstiger Weise am Bo- den befestigt ist, ist. Die Erfindung setzt weiterhin um, dass es beim Verbinden des Windenmontagerahmens mit einem Gabelstapler ausreicht, dass dieser an einer der Gabeln des Gabelstaplers montiert wird. Somit kann jegliche Struktur, die erforderlich ist, um zwei beabstandete Gabeln eines Gabelstaplers miteinander zu verbinden, wegfallen, was zu einer erheblich leichteren Vorrichtung führt.

Es ist bevorzugt, dass die Hülse des Windenmontagerahmens mit wenigstens einer Stellschraube versehen ist, um den Windenmontagerahmen an einer in die Hülse eingeführten Gabel eines Gabelstaplers zu befestigen. Die Stellschraube(n) ermöglichen eine sichere Befestigung des Windenmontagerahmens mittels einer kraftschlüssigen Arretierung.

Vorzugsweise ist der Windenmontagerahmen mit wenigstens einer Führungswalze in der Nähe der unteren Montageeinrichtung versehen, um das hochzuwindende Seil zu führen. Die auf den Windenmontagerahmen durch die Spannung des Führungsseils einwirkenden Biegemomente werden durch den Abstand zwischen der Führungswalze und der unteren Montageeinrichtung erheblich beeinflusst. Da sich die wenigstens eine Führungswalze nahe der unteren Montageeinrichtung befindet, kann das Biegemoment niedrig gehalten werden.

Vorzugsweise existieren wenigstens zwei Führungswalzen, wobei die entlang des hochzuwindenden Seils am nächsten zur Winde gelegene Führungswalze eine ortsfeste Walze und/oder die entlang des hochzuwindenden Seils am weitesten von der Winde gelegene Führungswalze eine winkelbewegliche Riemenscheibe ist. Der Ausdruck "ortsfeste Walze" beschreibt eine Walze, deren Rotationsachse dauerhaft ortsfest ist, wohingegen eine "win-kelbewegliche Riemenscheibe" ihre Winkelposition bezogen auf ihren Anbringungspunkt abhängig von den darauf ausgeübten Kräften, insbesondere durch das durchgeführte Führungsseil, ändern kann. Die ortsfeste Walze neben der eigentlichen Winde hält die auf die Winde ausgeübten Kräfte in einer vordefinierten Richtung und ermöglicht so, dass die Struktur des Windenmontagerahmens einfach an die zu erwartenden Lasten adaptiert werden kann, während die winkelbewegliche Riemenscheibe sicherstellt, dass das Führungsseil weder von einer beliebigen Rolle des Windenmontagerahmens rutscht noch aufgrund von Scheuern an Strukturelementen verschleißt.

Die obere Montageeinrichtung umfasst vorzugsweise wenigstens zwei Kontaktflächen, die in einem Winkel, vorzugsweise 90 Grad, angeordnet sind, wobei jede Kontaktfläche wenigstens ein Schraubenloch umfasst, so dass hierin eingeführte Schrauben zu der jeweiligen Oberfläche senkrecht stehen. Die Kontaktflächen ermöglichen in Kombination mit den darin befindlichen Schraubenlöchern das Montieren einer Winde am Windenmontagerahmen mittels Schrauben, wobei in keinem Lastzustand die Verbindung zwischen der Winde und dem Windenmontagerahmen ausschließlich auf der Scherfestigkeit der verwendeten Schrauben beruht.

Es ist bevorzugt, dass der Windenmontagerahmen ausgelegt ist, um Lasten von 5000 N in einem Austrittswinkel von 45° zur Horizontalen und 23° zur Vertikalen des hochzuwindenden Seils standzuhalten. Der Windenmontagerahmen kann wenigstens teilweise aus faserverstärktem Kunststoff hergestellt sein.

Die erfindungsgemäße Windenanordnung kann, zusätzlich zu einem erfindungsgemäßen Windenmontagerahmen und einer mit diesem verbundenen Winde, eine Fahrzeugrampe umfassen, die mit dem Windenmontagerahmen mittels der Schraubenlöcher an seiner unteren Montageeinrichtung lösbar verbunden ist, wobei die Fahrzeugrampe wenigstens eine Auffahrplatte umfasst, die zeitweilig mit einem Rad eines Fahrzeugs wird, um die Fahrzeugrampe durch das Gewicht des Fahrzeugs ortsfest zu machen. Wenn die Fahrzeugrampe mit dem Windenmontagerahmen verbunden ist, kann die Fahrzeugrampe auf dem Boden angeordnet sein, und ein Fahrzeug kann derart platziert werden, dass jedes seiner Räder jeweils auf einer der Auffahrflächen der Fahrzeugrampe aufliegen kann. Auf diese Weise sichert das Gewicht des Fahrzeugs die Position der Windenanordnung selbst bei gespanntem Führungsseil. Im Wesentlichen stellt die Fahrzeugrampe den ortsfesten Anbringungspunkt des Windenmontagerahmens bereit.

Es ist bevorzugt, dass die Winde der Windenanordnung eine manuelle Winde oder eine automatische Winde ist, wobei die Anordnung vorzugsweise eine manuelle Winde und eine automatische Winde umfasst, die austauschbar sind. Da die obere Montageeinrichtung des erfindungsgemäßen Windenmontagerahmens eine einfache Verbindung verschiedener Winden, - falls notwendig durch Verwendung von mit den Winden verbundenen Adapterplatten - ermöglicht, kann die Windenanordnung abhängig vom jeweiligen Betriebszweck variabel mit verschiedenen Winden verwendet werden. Weiterhin ist auch der Rückgriff auf die Verwendung einer manuellen Winde im Fall einer Fehlfunktion einer motorbetriebenen Winde leicht möglich.

Die Erfindung wird nachstehend bezugnehmend auf die beigefügten Figuren ausführlicher beschrieben:
- Figur 1a-c:: Schema einer ersten Ausführungsform einer Windenanordnung nach der Erfindung, die einen erfindungsgemäßen Windenmontagerahmen umfasst;
- Figur 2a:: Detailansicht der oberen Montageeinrichtung der Windenanordnung nach Figur 1 in zwei Alternativen; und
- Figur 2b:: Detailansicht der oberen Montageeinrichtung der Windenanordnung in einer Abwandlung von Figur 1; und
- Figur 3a-c:: Schema der Windenanordnung nach Figur 1 während der Verwendung.

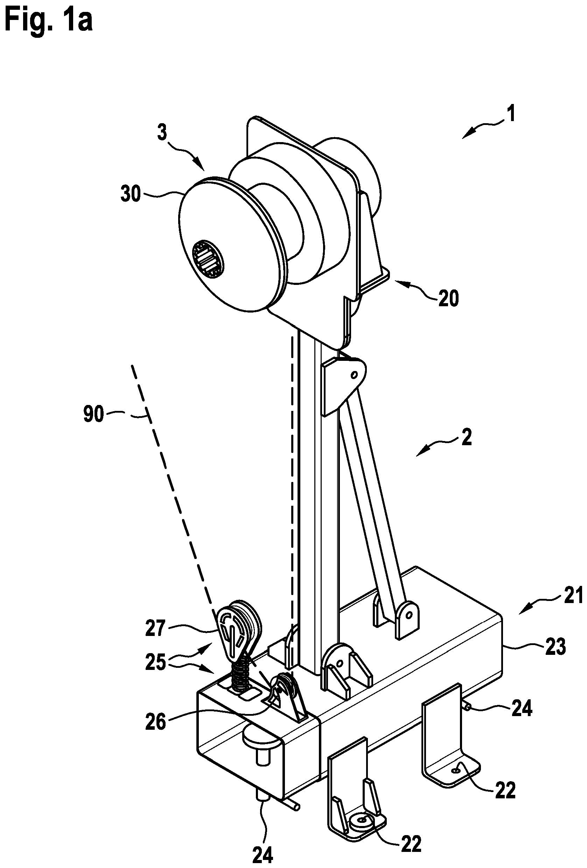

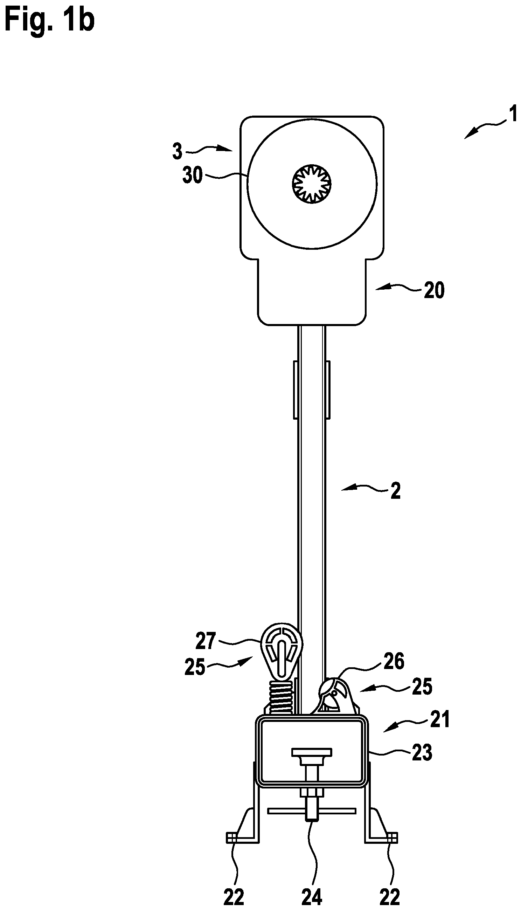

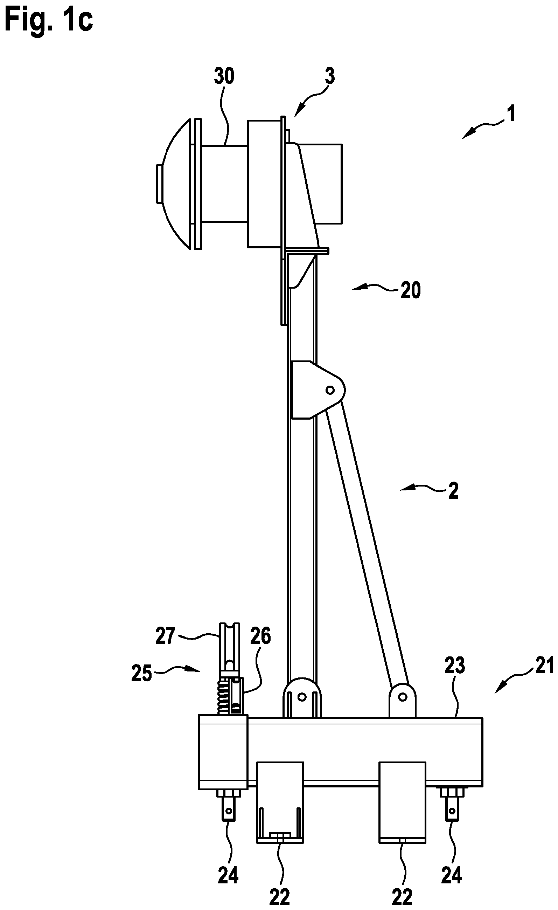

In Figur 1 wird eine erste Ausführungsform einer Windenanordnung nach der vorliegenden Erfindung in mehreren Ansichten gezeigt. Die Windenanordnung 1 soll für die Steuerung der Ausrichtung einer Windkraftanlagenkomponente während Hubabläufen beim Aufstellen der Windkraftanlage verwendet werden.

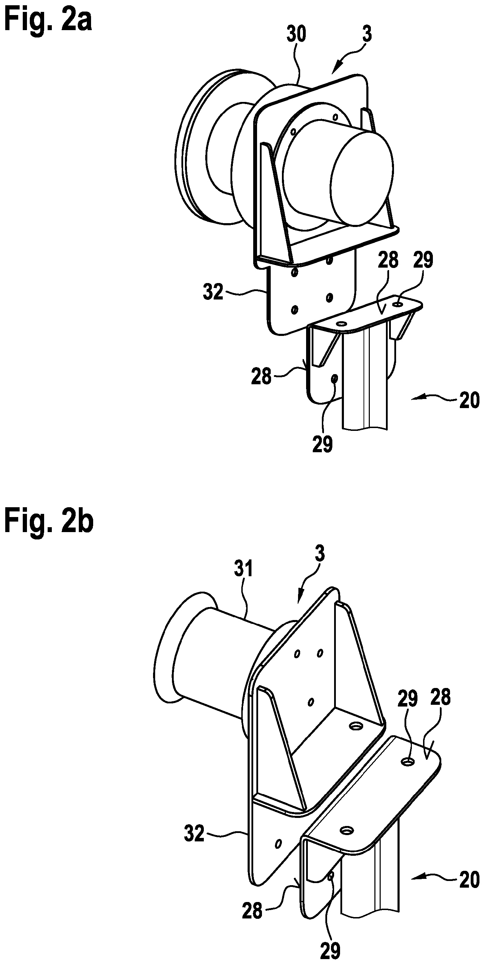

Die Windenanordnung 1 umfasst einen Windenmontagerahmen 2 mit oberer Montageeinrichtung 20, mit welcher eine Winde 3 verbunden ist. In Figur 1 ist die Winde 3 eine motorbetriebene Winde 30. Die obere Montageeinrichtung 11 wird nachstehend bezugnehmend auf Figur 2 genauer beschrieben.

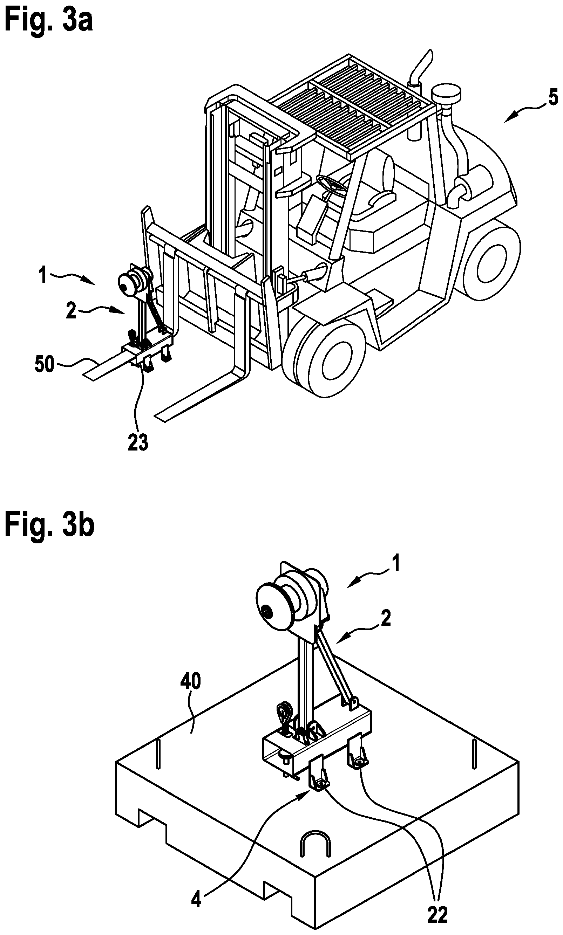

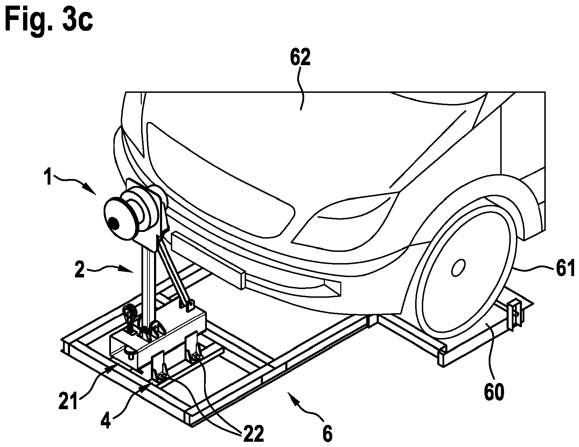

Der Windenmontagerahmen 10 umfasst weiterhin eine untere Montageeinrichtung 21 mit Schraubenlöchern 22 zum lösbaren Anschrauben des Windenmontagerahmens 2 an einen ortsfesten Anbringungspunkt 4, falls erforderlich, um den Windenmontagerahmen 20 an diesem zu sichern (siehe z. B. Figuren 3b und 3c). Die Schraubenlöcher 22 sind für M10-Schrauben dimensioniert.

Zusätzlich umfasst die untere Montageeinrichtung 21 eine Hülse 23, damit der Windenmontagerahmen 20 auf eine einzelne Gabel 50 eines Gabelstaplers 5 aufgeschoben werden kann (siehe Figur 3a). Die Hülse 23 ist mit zwei Stellschrauben 24 versehen, um den Windenmontagerahmen 20 an der in die Hülse 23 eingeführten einzelnen Gabel 50 eines Gabelstaplers 5 zu befestigen.

In der Nähe der unteren Montageeinrichtung 21 sind zwei Führungswalzen 25, eine ortsfeste Walze 26 und eine winkelbewegliche Riemenscheibe 27, vorhanden. Das Führungsseil (angedeutet durch die gestrichelte Linie 90 in Figur 1a), das von der Windkraftanlagenkomponente, mit der es verbunden ist, kommt, wird zuerst durch die Riemenscheibe 27, dann durch die ortsfeste Walze 26 geführt, bevor es tatsächlich auf die Winde 3 hochgewunden wird. Die ortsfeste Walze 26 neben der eigentlichen Winde 3 stellt sicher, dass die Kräfte, die durch das Führungsseil 90 auf die Winde 3 ausgeübt werden, in einer vorgegebenen Richtung einwirken, was ermöglicht, dass die Struktur des Windenmontagerahmens 20 an diese leicht vorhersehbaren Lasten adaptiert werden kann. Somit ist eine leichtgewichtige Konstruktion des Windenmontagerahmens 20 möglich. Die Riemenscheibe 27 stellt eine geeignete Führung des in die Windenanordnung 1 eintretenden Führungsseils 90 sicher. Beide Führungswalzen 25 sind in der Lage, ein Seil mit einem Durchmesser von bis zu 12 Millimeter zu führen.

Figur 2a zeigt eine Detailansicht der oberen Montageeinrichtung 20 des Windenmontagerahmens 2. Die obere Montageeinrichtung 20 umfasst zwei Kontaktflächen 28. Eine der Kontaktflächen 28 ist vertikal angeordnet, die andere ist horizontal angeordnet, d. h., die beiden Kontaktflächen 28 sind bezogen aufeinander in einem Winkel von 90 Grad angeordnet.

Weiterhin ist jede Kontaktfläche 28 mit Schraubenlöchern 29 zum Aufnehmen von Schrauben, die dann zur jeweiligen Kontaktfläche 28 senkrecht verlaufen, versehen.

Die Winde 3 ist mit einer Adapterplatte 32, die die Kontaktflächen 28 und die Schraubenlöcher 29 der oberen Montageeinrichtung 20 des Windenmontagerahmens 2 widerspiegeln, versehen. Die Winde 3 kann somit unter Verwendung von Schrauben (nicht dargestellt) leicht am Windenmontagerahmen 2 montiert werden. Durch die in Figur 2a gezeigte Konfiguration der oberen Montageeinrichtung 20 wird sichergestellt, dass die Verbindung zwischen dem Windenmontagerahmen 2 und der Winde 3 in keinem Lastzustand ausschließlich auf der Scherkraftstabilität der verwendeten Schrauben beruht.

Gleichzeitig kann die Winde 3 leicht ersetzt werden. Beispielsweise zeigt Figur 2b die obere Montageeinrichtung 20 des Windenmontagerahmens 2 als zu der in Figur 2a und damit Figur 1 identisch. Anstelle einer motorgetriebenen Winde 30 ist die an der oberen Montageeinrichtung 20 anzuschraubende Winde 3 jedoch eine manuelle Winde 31. Die verschiedenen Winden 3, 30, 31 sind problemlos austauschbar.

Figur 3 zeigt verschiedene Verwendungen der Windenanordnung 1 und des Windenmontagerahmens 2 nach den vorstehenden Figuren.

In Figur 3a ist die Hülse 23 des Windenmontagerahmens 2 auf die Gabel 50 eines Gabelstaplers 5 aufgeschoben und an dieser mittels der Stellschrauben 24 gesichert. Das Gewicht des Gabelstaplers 5 stellt sicher, dass die Windenanordnung 1 ortsfest bleibt.

In Figur 3b ist der Windenmontagerahmen 2 der Windenanordnung 1 an einen Betonblock 40 geschraubt. Aufgrund seines Gewichts bietet der Betonblock 40 einen ortsfesten Anbringungspunkt 4.

In Figur 3c ist die Windenanordnung 1 um eine Fahrzeugrampe 6 ergänzt, die einen ortsfesten Anbringungspunkt 5 bereitstellt. Die Fahrzeugrampe 6 ist lösbar am Windenmontagerahmen 2 an seiner unteren Montageeinrichtung 21 mittels Schraubenlöchern 22 angeschraubt und umfasst zwei Auffahrplatten 60 (nur eine in Figur 3c sichtbar), auf der die beiden Vorderräder 61 eines Fahrzeugs 62 abgestellt sind. Durch das Gewicht des Fahrzeugs 62 kann die Fahrzeugrampe 6 einen ortsfesten Anbringungspunkt 4 für den Windenmontagerahmen 2 und die Winde 3 bereitstellen.

Die in den Figuren dargestellten Windenmontagerahmen 1 sind aus Stahl, z. B. S275 und/oder S355, hergestellt. Aufgrund der möglichen leichtgewichtigen Konstruktion wiegt der Windenmontagerahmen 1 lediglich etwa 32 kg, was seine Handhabung und Verwendung erleichtert. Das Gewicht kann durch Herstellen von wenigstens einem Teil der Struktur des Windenmontagerahmens 1 aus faserverstärktem Kunststoff noch weiter reduziert werden.

## Patentansprüche

1. Windenmontagerahmen (2) zur Verwendung in einer Windenanordnung (1) zum Steuern der Ausrichtung einer Windkraftanlagenkomponente während Hubabläufen beim Aufstellen einer Windkraftanlage, der eine obere Montageeinrichtung (20) zum Verbinden einer Winde (3) mit demselben und eine untere Montageeinrichtung (21), die Schraubenlöcher (22) zum lösbaren Anschrauben des Windenmontagerahmens (2) an einen ortsfesten Anbringungspunkt (4) umfasst, umfasst, **dadurch gekennzeichnet, dass** die untere Montageeinrichtung (21) außerdem eine Hülse (23) zum alternativen Aufschieben des Windenmontagerahmens (2) auf eine einzelne Gabel (50) eines Gabelstaplers (5) aufweist.

2. Windenmontagerahmen nach einem beliebigen der vorstehenden Ansprüche, wobei die Hülse (23) des Windenmontagerahmens (2) mit wenigstens einer Stellschraube (24) versehen ist, um den Windenmontagerahmen (2) an einer Gabel (50) eines Gabelstaplers (5), die in die Hülse (23) eingeschoben ist, zu befestigen.

3. Windenmontagerahmen nach einem beliebigen der vorstehenden Ansprüche, wobei der Windenmontagerahmen (2) mit wenigstens einer Führungswalze (25) in der Nähe der unteren Montageeinrichtung (21) zum Führen des hochzuwindenden Seils versehen ist.

4. Windenmontagerahmen nach einem beliebigen der vorstehenden Ansprüche, wobei wenigstens zwei Führungswalzen (25) vorhanden sind, wobei die entlang des hochzuwindenden Seils (90) am nächsten zur Winde (3) gelegene Führungswalze (25) eine ortsfeste Walze (26) und/oder die entlang des hochzuwindenden Seils (90) am weitesten von der Winde (3) gelegene Führungswalze (25) eine winkelbewegliche Riemenscheibe (27) ist.

5. Windenmontagerahmen nach einem beliebigen der vorstehenden Ansprüche, wobei die obere Montageeinrichtung (20) wenigstens zwei Kontaktflächen (28) umfasst, die in einem Winkel angeordnet sind, und jede Kontaktfläche (28) wenigstens ein Schraubenloch (29) umfasst, so dass darin eingeführte Schrauben zu der jeweiligen Kontaktfläche (28) senkrecht stehen.

6. Windenmontagerahmen nach einem beliebigen der vorstehenden Ansprüche, wobei der Windenmontagerahmen (2) ausgelegt ist, um Lasten von 5000 N in einem Austrittswinkel von 45° zur Horizontalen und 23° zur Vertikalen des hochzuwindenden Seils standzuhalten.

7. Windenmontagerahmen nach einem beliebigen der vorstehenden Ansprüche, wobei der Windenmontagerahmen (2) wenigstens teilweise aus faserverstärktem Kunststoff hergestellt ist.

8. Windenanordnung (1), die einen Windenmontagerahmen (2) nach einem beliebigen der vorstehenden Ansprüche und eine Winde (3), die lösbar mit der oberen Montageeinrichtung (20) des Windenmontagerahmens (2) verbunden ist, umfasst.

9. Windenanordnung nach Anspruch 8, wobei die Windenanordnung (1) eine Fahrzeugrampe (6) umfasst, die lösbar mit dem Windenmontagerahmen (2) mittels der Schraubenlöcher (22) an seiner unteren Montageeinrichtung (21) verbunden ist, wobei die Fahrzeugrampe (6) wenigstens eine Auffahrplatte (60) umfasst, die zeitweilig mit einem Rad (61) eines Fahrzeugs (62) belastet werden kann, um die Fahrzeugrampe (6) durch das Gewicht des Fahrzeugs (61) stationär zu machen.

10. Windenanordnung nach Anspruch 8 oder 9, wobei die Winde (3) eine manuelle Winde (31) oder eine motorbetriebene Winde (30) ist, wobei die Anordnung vorzugsweise eine manuelle Winde (31) und eine motorbetriebene Winde (30) umfasst, die austauschbar sind.

## Claims

1. Winch mounting frame (2) for use in a winch arrangement (1) for controlling the orientation of a wind-turbine component during lifting operations when erecting a wind turbine, comprising an upper mounting device (20), for connection of a winch (3) thereto, and a lower mounting device (21), which comprises screw holes (22) for releasable screwing of the winch mounting frame (2) to a positionally fixed attachment point (4), **characterized in that** the lower mounting device (21) additionally has a sleeve (23) for alternative pushing of the winch mounting frame (2) onto a single fork (50) of a forklift truck (5) .

2. Winch mounting frame according to any of the preceding claims, wherein the sleeve (23) of the winch mounting frame (2) is provided with at least one setting screw (24) for fastening the winch mounting frame (2) to a fork (50) of a forklift truck (5) inserted into the sleeve (23) .

3. Winch mounting frame according to any of the preceding claims, wherein the winch mounting frame (2) is provided with at least one guide roller (25) in the vicinity of the lower mounting device (21) for guiding the rope for winching.

4. Winch mounting frame according to any of the preceding claims, wherein at least two guide rollers (25) are present, wherein the guide roller (25) which is situated closest to the winch (3) along the rope (90) for winching is a positionally fixed roller (26) and/or the guide roller (25) which is situated furthest away from the winch (3) along the rope (90) for winching is an angularly movable belt pulley (27).

5. Winch mounting frame according to any of the preceding claims, wherein the upper mounting device (20) comprises at least two contact surfaces (28) which are arranged at an angle, and each contact surface (28) comprises at least one screw hole (29) such that screws inserted therein are perpendicular to the respective contact surface (28).

6. Winch mounting frame according to any of the preceding claims, wherein the winch mounting frame (2) is designed to withstand loads of 5000 N at an outgoing angle of 45° to the horizontal and 23° to the vertical of the rope for winching.

7. Winch mounting frame according to any of the preceding claims, wherein the winch mounting frame (2) is at least partially produced from fibre-reinforced plastic.

8. Winch arrangement (1) comprising a winch mounting frame (2) according to any of the preceding claims and a winch (3) which is releasably connected to the upper mounting device (20) of the winch mounting frame (2).

9. Winch arrangement according to Claim 8, wherein the winch arrangement (1) comprises a vehicle ramp (6) which is releasably connected to the winch mounting frame (2) by means of the screw holes (22) at its lower mounting device (21), wherein the vehicle ramp (6) comprises at least one drive-on plate (60) which can be temporarily loaded by a wheel (61) of a vehicle (62) in order to make the vehicle ramp (6) stationary as a result of the weight of the vehicle (61).

10. Winch arrangement according to Claim 8 or 9, wherein the winch (3) is a manual winch (31) or a motor-operated winch (30), wherein the arrangement preferably comprises a manual winch (31) and a motor-operated winch (30) that are exchangeable.

## Revendications

1. Châssis (2) de montage de treuil destiné à être utilisé dans un ensemble de treuil (1) pour commander l'orientation d'un composant d'éolienne pendant des séquences de levage lors de l'installation d'une éolienne, comprenant un moyen de montage supérieur (20) pour relier un treuil (3) à lui et un moyen de montage inférieur (21), comprenant des trous à vis (22) pour visser de manière amovible le châssis (2) de montage de treuil sur un point de fixation fixe (4), **caractérisé en ce que** le dispositif de montage inférieur (21) comprend en outre un manchon (23) pour faire glisser alternativement le châssis (2) de montage de treuil sur une branche de fourche (50) d'un chariot élévateur à fourche (5).

2. Châssis de montage de treuil selon l'une quelconque des revendications précédentes, dans lequel le manchon (23) du châssis (2) de montage de treuil est pourvu d'au moins une vis de réglage (24) pour fixer le châssis (2) de montage de treuil à une fourche (50) d'un chariot élévateur à fourche (5) insérée dans le manchon (23).

3. Châssis de montage de treuil selon l'une quelconque des revendications précédentes, dans lequel le châssis (2) de montage de treuil est pourvu d'au moins un rouleau de guidage (25) à proximité du dispositif de montage inférieur (21) pour guider le câble à treuiller.

4. Châssis de montage de treuil selon l'une quelconque des revendications précédentes, dans lequel au moins deux rouleaux de guidage (25) sont prévus, le rouleau de guidage (25) le plus proche du treuil (3) le long du câble (90) à enrouler en hauteur étant un rouleau fixe (26) et/ou le rouleau de guidage (25) le plus éloigné du treuil (3) le long du câble (90) à enrouler en hauteur étant une poulie (27) mobile angulairement.

5. Châssis de montage de treuil selon l'une quelconque des revendications précédentes, dans lequel le dispositif de montage supérieur (20) comprend au moins deux surfaces de contact (28) disposées selon un angle, et chaque surface de contact (28) comprend au moins un trou à vis (29), de sorte que les vis insérées sont perpendiculaires à la surface de contact (28) respective.

6. Châssis de montage de treuil selon l'une quelconque des revendications précédentes, dans lequel le châssis (2) de montage de treuil est conçu pour résister à des charges de 5000 N à un angle de sortie de 45° par rapport à l'horizontale et de 23° par rapport à la verticale du câble à treuiller.

7. Châssis de montage de treuil selon l'une quelconque des revendications précédentes, dans lequel le châssis (2) de montage de treuil est au moins partiellement fabriqué en matière plastique renforcée par des fibres.

8. Ensemble de treuil (1) comprenant un châssis (2) de montage de treuil selon l'une quelconque des revendications précédentes et un treuil (3) qui est relié de manière amovible au dispositif de montage supérieur (20) du châssis (2) de montage de treuil.

9. Ensemble de treuil selon la revendication 8, dans lequel l'ensemble de treuil (1) comprend une rampe de véhicule (6) associée de manière amovible au châssis (2) de montage de treuil au moyen des trous à vis (22) sur son moyen de montage inférieur (21), la rampe de véhicule (6) comprenant au moins une plaque d'accès (60) apte à être temporairement chargée par une roue (61) d'un véhicule (62) pour immobiliser la rampe de véhicule (6) par le poids du véhicule (61).

10. Ensemble de treuil selon la revendication 8 ou 9, dans lequel le treuil (3) est un treuil manuel (31) ou un treuil motorisé (30), l'ensemble comprenant de préférence un treuil manuel (31) et un treuil motorisé (30) qui sont interchangeables.
